Europäisches Patentamt

European Patent Office

Office européen des brevets

(19)

(11) Publication number : **0 023 114**
**B2**

(12) **NEW EUROPEAN PATENT SPECIFICATION**

(45) Date of publication of the new patent specification :
08.07.87

(51) Int. Cl.⁴ : **G 02 B   6/32**

(21) Application number : **80302335.7**

(22) Date of filing : **10.07.80**

(54) **Lens-applied optical fibre connectors.**

(30) Priority : 11.07.79 JP 94498/79
28.08.79 JP 108576/79
13.12.79 JP 160748/79
27.12.79 JP 182197/79
28.12.79 JP 170982/79

(43) Date of publication of application :
28.01.81 Bulletin 81/04

(45) Publication of the grant of the patent :
29.12.82 Bulletin 82/52

(45) Mention of the opposition decision :
08.07.87 Bulletin 87/28

(84) Designated contracting states :
**DE FR GB**

(56) References cited :
**GB-A- 2 002 136**
**Electronics Letters, 3rd August 1978, Vol. 14, No. 16 p. 511/512**

(73) Proprietor : **FUJITSU LIMITED**
**1015, Kamikodanaka Nakahara-ku**
**Kawasaki-shi Kanagawa 211 (JP)**

(72) Inventor : **Masuda, Sigefumi**
**14-19, Tachibanadai 1-chome Midori-ku**
**Yokohama-shi Kanagawa, 227 (JP)**

(74) Representative : **Bedggood, Guy Stuart et al**
**Haseltine Lake & Co. Hazlitt House 28 Southampton**
**Buildings Chancery Lane**
**London WC2A 1AT (GB)**

Jouve, 18, rue St-Denis, 75001 Paris, France

## Description

This invention relates to lens-applied optical fibre connectors.

Various kinds of connectors for optically connecting optical fibres have been developed and they can be roughly classified into two types :

the first type employs a direct connecting method wherein optical fibres are arranged directly face-to-face, and the second type employs a lens-applied method wherein optical lenses are used to effect connection.

Basically, direct connecting methods employ structures such that the ends of optical fibres to be connected are inserted into sleeves and these sleeves are further inserted into an adapter, so that the optical fibres are arranged face-to-face. In such a structure, it is essential to keep deviations in alignment of the optical axes of the optical fibres arranged to face-to-face as small as possible in order to keep connecting losses small.

To this end, clearance between sleeve and adapter should be small, the outer diameter of the sleeve should be formed with high accuracy, an optical fibre insertion hole provided in the sleeve should be formed accurately along the centre axis of the sleeve and clearance between the insertion hole and the optical fibre should be small.

More specifically, for a single mode fibre, the external diameter of the sleeve should be formed to within a tolerance of 0.5 $\mu$m, the insertion hole should be accurate to within 0.9 $\mu$m and play between the insertion hole and fibre should be within 0.5 $\mu$m. However, in practice, deflection or deviation in the optical axis of an optical fibre must be within 1 $\mu$m even when all of the above factors are taken into account. Attempts have been made to achieve this end.

For example, a split sleeve is provided within an adapter and the sleeve is inserted tightly within the adapter.

In the structure, the sleeve has a tight fit, requiring a large insertion or removal force, in order to make the clearance between the adapter and sleeve small.

A press-in method by which the sleeve must be inserted in the adapter results in wearing of the sleeve and the adapter, and since the clearance between fibres is as small as 1 to 2 micro-meters, powder resulting from friction between sleeve and adapter may adhere to the end surfaces of optical fibres give rise to a connecting loss.

In addition, the structure used for positioning an optical fibre to the centre of a sleeve has been complicated and adjustment has taken a long period of time.

In the light of these problems, lens-applied optical fibre connectors utilising a couple of lenses disposed between optical fibres have been proposed Electronics Letters, 3rd August 1978, Vol. 14, N° 16, pages 511 and 512, « Practical low-loss lens connector for optical fibres », by A. Nicia, discloses a lens-applied optical fibre connector. In this connector two lens fibre assemblies receive respectively a screw threaded part and a screw threaded nut. The assemblies are joined by screwing together the screw threaded part and the screw threaded nut. Each assembly has a reference plane which projects beyond the lens of the assembly. When the two assemblies are joined their respective reference planes meet to align the two assemblies. This also prevents contact between the respective lenses of the assemblies. The angular position of the optical fibre of each assembly is adjusted with respect to the reference plane and the lens of the assembly.

A United Kingdom Patent Application, publication No. G.B. 2,002,136A, discloses a lens-applied optical fibre connecting method in which two sphere lenses are each mounted in a recess in the end of a cylindrical ferrule with its centre aligned on the axis of an optical fibre received in a hole extending through the ferrule, the optical fibre being preferably bonded to the surface of the sphere lens. The ferrules are slidably received in a cylindrical connecting member or members with the sphere lenses in opposed relationship to optically connect the fibres.

In another lens-applied connection method, a lens and an optical fibre are arranged in such a way that the distance between the lens centre and optical fibre surface is equal to the focal length of the lens. As a result, a diverging light beam emitted from the optical fibre is converged into parallel rays by the lens which rays are directed at and converged again by another lens and focused on the end surface of a receiving optical fibre. In such a lens-applied method, the stringency of requirements of accuracy of alignment is alleviated to some extent because of the diverging of light.

With a lens-applied method press-in of a sleeve into an adapter, which is required in the direct connecting method, can be made unnecessary, but a lens-applied method can have a disadvantage in that losses can become large as compared with the direct connecting method if angular deviation between optical fibres is generated, i. e. if the optical axes of two optical fibres to be connected are not aligned but are inclined or angled to one another.

Thus, it is desired to provide a lens-applied optical fibre connector in which the possibility of occurrence of angular deviation between optical fibres, or the occurrence of axial deviation between optical fibres, is satisfactorily small. Further, it is desired to provide a lens-applied optical fibre connector in which an amount of angular deviation, or axial deviation, between optical fibres can be tolerated. That is, it is desired to provide a lens-applied optical fibre connector which will provide a satisfactory connection between optical fibres even if an amount of deviation is present.

Moreover, if the lenses used in a lens-applied optical fibre connector are subjected to force or stress the lenses may be displaced or damaged and this can result in unacceptable connection losses.

It is desirable to provide a lens-applied optical fibre connector in which the application of force or stress to connector lenses can be avoided.

According to the present invention there is provided a lens-applied optical fibre connector comprising a pair of cylindrical sleeves, each having a through hole therein, for receiving an optical fibre, along its centre axis, a hollow cylindrical adapter having a through hole formed therein for axially locating the sleeves, by insertion into opposite ends of the through hole in the adapter, and a pair of lenses arranged between end surfaces of the sleeves which are disposed face to face in the through hole of the adapter when the sleeves are inserted, for optically connecting the optical fibres via the lenses, characterised in that each lens of the pair of lenses is held in a lens holder provided at the end surface of the sleeve to which the lens is adjacent, which lens holder is positioned on the end surface of that sleeve for aligning the centre of the lens held in the lens holder with the optical axis of the optical fibre received in the sleeve and bonded in place after such positioning, and which lens holder projects towards the other sleeve beyond the lens so as to prevent contact between the lenses of the pair when the sleeves are inserted in the adapter, and in that a guard member is provided for each lens holder, separately from the lens holder, at the end surface of the sleeve at which the lens holder is provided, which guard member projects towards the other sleeve beyond the lens holder so as to prevent contact between the respective lens holders when the sleeves are inserted in the adapter.

The employment of such lens holders and separate guard members in a connector embodying the present invention provides that the lenses and lens holders cannot contact one another, so that detrimental forces or stresses cannot be applied to the lenses.

In preferred embodiments of the present invention the use of spherical lenses having focal lengths in the range 0.09 mm to 0.27 mm provides for the toleration of a certain amount of axial and/or angular deflection.

An embodiment of the present invention can provide a lens-applied optical fibre connector which is capable of compensating for axial deflection if it arises.

An embodiment of this invention can provide a lens-applied optical fibre connector which avoids wear during insertion and removal.

An embodiment of this invention can provide a lens-applied optical fibre connector which can improve mechanical strength in an optical fibre connecting area with a simple structure.

The present invention can provide an optical fibre connector particularly suitable for single mode fibres.

References will be made, by way of example, to the accompanying drawings, in which :

Figure 1 schematically illustrates the general form of a lens-applied optical fibre connector to which the invention may be applied ;

Figure 2 is a graph showing a relationship between the refractive index of the connecting lens and loss, for different values of lens diameter ;

Figure 3 is a graph showing the relationship between the radius of the spherical connecting lens and loss, for different values of axial deflection between optical fibres connected ;

Figures 4 and 5 are graphs respectively showing the relationship between the radius of the spherical connecting lens and loss, for different values of angular deflection between optical fibres connected ;

Figure 6 and Figure 7 are respective schematic illustrations of a structure for compensating for axial deflection, as employed in an embodiment of the present invention ;

Figure 8 is a schematic, partly sectional, illustration of a spherical lens holding structure as employed in an embodiment of this invention ;

Figure 9 illustrates, in section, the materials of and connection relationship between a sleeve and an adapter in an embodiment of the present invention ; and

Figure 10 illustrates, in section, an existing lens-applied optical fibre connector.

In order to arrive at an arrangement for reducing connecting losses arising from angular deflection and axial deflection in a lens-applied optical fibre connector, connecting losses related to the focal distances of spherical lenses have been investigated.

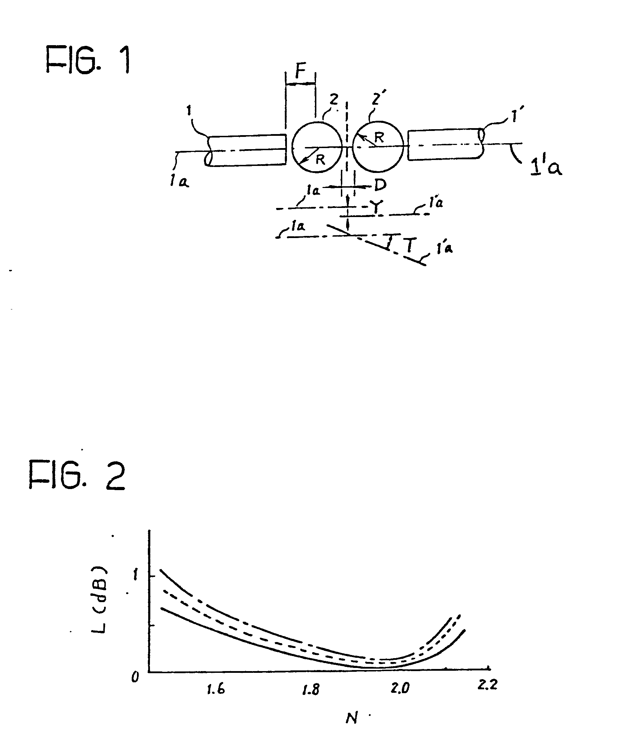

Optical fibres and spherical lenses were arranged as shown in Figure 1. That is, as shown in Figure 1, spherical lenses 2 and 2' were arranged respectively face to face with the end surfaces of optical fibres 1 and 1' to be optically connected thereby, keeping the distances between the centres of the lenses and the end surfaces to the focal distance F of the lenses and so that the optical axes 1a, 1a' of the optical fibres pass through the centres of the lenses.

Thus, an optical beam transmitted through optical fibre 1 diverges from the end of the optical fibre, is converted into parallel light rays by means of the spherical lens 2, and the parallel light rays are then caused to converge into the other optical fibre 1' (which is to be optically connected with fibre 1) by means of the other spherical lens 2'.

In such an arrangement, the effect on losses of using materials of different refractive indices for forming the spherical lenses was investigated for different diameters of spherical lens, prior to determination of the focal distance of the spherical lenses. The results are shown in Figure 2.

In the graph of Figure 2, the X axis relates to refractive index N, while the Y axis relates to loss L (dB). The solid line corresponds to a spherical lens diameter of 125 $\mu$ ; the broken line corresponds to a spherical lens diameter of 100 $\mu$ and

the chain line corresponds to a spherical lens diameter of 62.5 μ.

It is assumed, for the plotting of the graph of Figure 2, that the measurements were taken in conditions in which axial deflection and angular deflection were zero, and anti-reflection films were formed on the spherical lens surfaces. Therefore, the characteristics indicated in the graph of Figure 2 are assumed to indicate only losses generated due to passage of an optical beam through the spherical lenses.

As will be obvious from the graph of Figure 2, losses are minimized for any diameter of lens when the lenses have a refractive index around 1.95 to 2.0, and it can thus be understood that it is desirable to use materials having a refractive index from 1.7 to 2.1, to keep losses down to 0.5 dB.

Based on the above results, various kinds of spherical lenses of different diameters have been formed using materials having refractive indices within the indicated range (glass, sapphire, gadolinium, gallium garnet, etc.), and then effects on losses of axial deflection and angular deflection have been investigated.

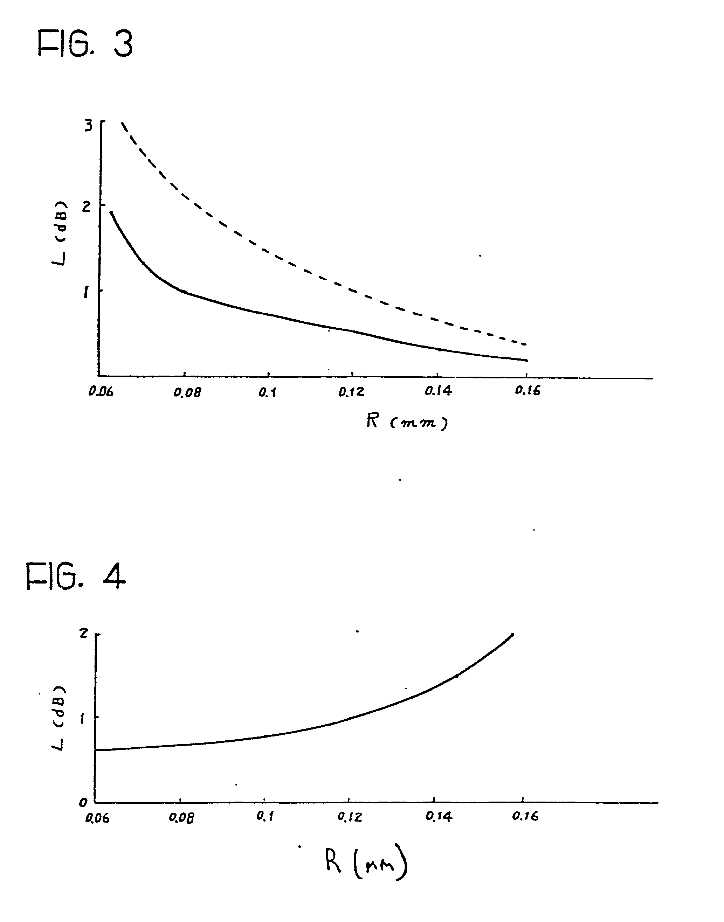

The graph of Figure 3 shows the results of experiments for determining the effects upon losses resulting from optical axis deflections of optical fibres to be connected of changes in radius of curvature R of the spherical lenses used for effecting the connection. The X axis represents the radius of curvature of the spherical lenses R(mm), whilst the Y axis represents connecting loss L (dB). For the experiment, spherical lenses consisting of glass having a refractive index N of 1.75 were used and axial deflection (indicated by Y in Figure 1) values of Y = 5 μm and Y = 2.5 μm were selected. In addition, as the optical fibres, single mode optical fibres of a core diameter a = 4 μm, a refractive index difference $\Delta$ = 0.3 % and normalized frequency V = 2.37 were used.

In the graph of Figure 3, the broken line corresponds to the loss versus radius of curvature characteristic when Y = 5 μm, whilst the solid line corresponds to the loss versus radius of curvature characteristic when Y = 2.5 μm.

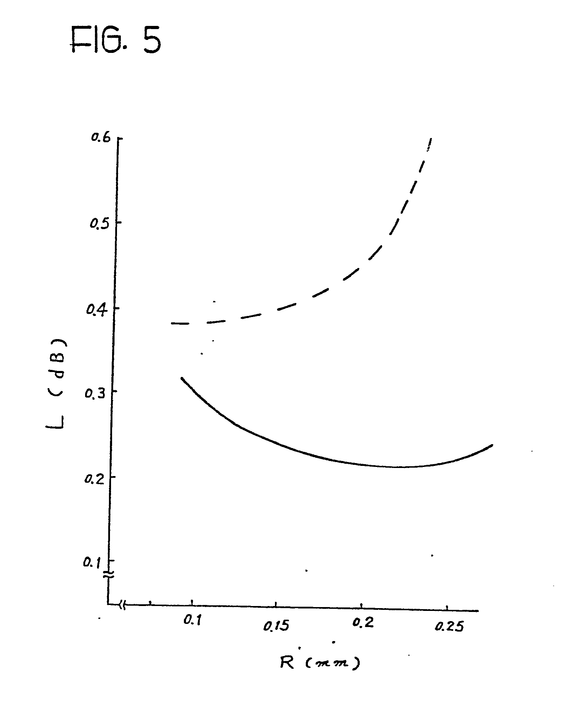

Figure 4 and Figure 5 respectively show the results of experiments for investigating the effects upon losses due to angular deflection (indicated by T in Figure 1) of the optical fibres to be connected of changes in the radius R of curvature of the spherical lenses. For the experiments, spherical lenses consisting of glass having a refractive index N of 1.75 were used and angular deflection T was set to 1° (Figure 4) and 0.25° (Figure 5).

As the optical fibres, in the case of Figure 4 single mode optical fibres were used as for Figure 3.

In Figure 5, the broken line corresponds to the characteristic of a single mode optical fibre of which the core diameter a is 3 μ, the difference of refractive index $\Delta$ is 0.63 % and standardized frequency V is 2.23. On the other hand, the solid line corresponds to the characteristic of a fibre of which the core diameter a is 4.3 μ, refractive index difference $\Delta$ is 0.29 %, and standardized frequency V is 2.23.

The appropriate focal distance of a spherical lens can be determined from the above experimental results. From Figure 3, R must be about 0.08 mm or more and from Figure 4, R must be about 0.16 mm or less, in order to keep the connecting losses down to 2 dB or less, so as to have no significant effect so far as optical communication is concerned. Since the focal distance F of a spherical lens is given by the relation, F = N R/2 (N — 1), the focal distance is selected to a value within the range from 0.09 to 0.27 (mm).

From the above, the optimum focal distance of a spherical lens can be obtained.

When it is required to further reduce connecting losses, compensation as described below is necessary.

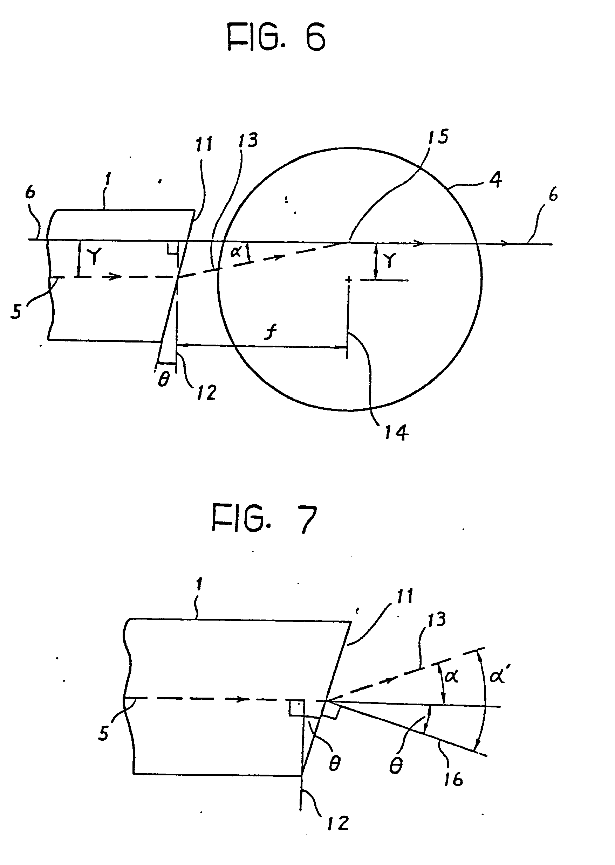

In Figure 6, it is assumed that optical axis 5 of optical fibre 1 is deflected by a distance Y from the centre axis 6 of the sleeve in which the optical fibres are held for connection. The end face 11 of optical fibre 1 is polished so that it is inclined in relation to the spherical lens 4 (lens 2 in Figure 1) to a degree as given by the following equation with respect to a surface 12 which orthogonally crosses the optical axis 6 of the sleeve.

$$\theta = Y/f(n_0 - 1)$$

Where, f : focal distance of spherical lens 4, $n_0$ refractive index of core of optical fibre 1.

On the other hand, the centre of spherical lens 4 is located along the line of the optical axis of the optical fibre 1 spaced apart from the centre of end surface 11 of the optical fibre 1 by a distance equal to the focal distance f of the spherical lens 4.

In such a structure, an optical beam emitted from the optical fibre 1 passes through the spherical lens 4 and is output onto the optical axis 6 of the sleeve.

The reason for this will be explained by making reference to Figure 6 and Figure 7.

In Figure 7, a light beam travelling on optical axis 5 of optical fibre 1 is emitted to the air from the end surface 11 of the fibre and then travels in a certain direction (13).

Assuming the angle between that certain direction and a normal 16 to the end surface 11 is $\alpha'$. Then, the following relationship can be obtained from Fresnel's law.

$n_{air} \cdot \sin \alpha' = n_0 \sin \theta$ ($n_{air}$ is the refractive index of the air).

Since both $\alpha'$ and $\theta$ are about 1° and are thus very small, and $n_{air}$ is 1, $\alpha' = n_0 \cdot \theta$.

On the other hand, when an optical beam which has travelled along the optical axis 5 of optical fibre 1 emerges in the certain direction 13 after it has been emitted to the open air from the end surface 11 of the fibre, if the angle formed between direction 13 and the optical axis 5 of the optical fibre 1 is assumed as $\alpha$, then $\alpha = \alpha' - \theta$.

Substituting for $\alpha'$ in above equation the following relationship can be obtained :

$\alpha = n_0 \cdot \theta - \theta$.

From Figure 6, on the other hand,

$Y = f \cdot \tan \alpha$

Since $\alpha$ is also as small as about 1°,

$Y \doteqdot f \cdot \alpha$

Therefore, the following relationship can be obtained by substituting into the above equation :

$Y = f \cdot (n_0 \cdot \theta - \theta)$

$\therefore \theta = Y/f \cdot (n_0 - 1)$

Thus, an optical beam emitted from the optical fibre 1 passes a point deflected by a distance Y from the centre of the spherical lens 4 when the beam passes through a surface 14 (the reference surface of the spherical lens) which orthogonally intersects the optical axis 6 of the sleeve and simultaneously passes through the centre of spherical lens 4. Since this point is the intersection of the reference surface 14 of the spherical lens 4 and the optical axis 6, the optical beam travels on the optical axis 6 after having passed through the spherical lens 4.

When another (receiving) spherical lens 4' (corresponding to 2' in Figure 1) and the other optical fibre 1' of Figure 1 are structured as in the case above, the optical beam having being emitted and having travelled along the optical axis 6 travels into the optical axis of the other optical fibre 1'.

As explained above, if the optical axes of the fibres 1, 1' are deflected, it can be provided that an optical beam can be relayed even between the optical fibres with their optical axes deflected in relation to one another, merely by polishing the end surface 11 and establishing the positional relation with the spherical lenses 4, 4' as explained above.

Here, it is assumed that the centre of lens 4 is located along the line of the extension of the optical axis of optical fibres for the compensation explained in Figure 6 and Figure 7.

If the lenses of a lens-applied optical fibre connector come into direct contact, for example, when a sleeve is inserted into the adapter, lens displacement or even damage may arise.

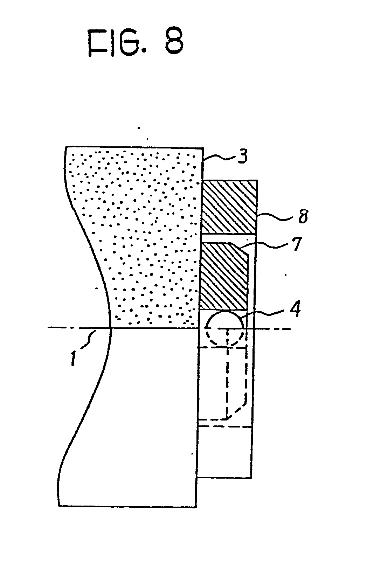

A lens holding structure as shown in Figure 8 has been developed with a view to preventing such contact.

Such a holding structure will be explained below. In Figure 8, 7 is a lens holder and 8 is a guard ring.

An optical fibre 1 is arranged along a centre axis of a cylindrical sleeve 3, which has the spherical lens 4 at an end thereof. This spherical lens 4 is held around its circumference by a lens holder 7 which is bigger than the spherical lens 4. The lens holder 7 is provided with the guard ring 8 which is thicker than the lens holder 7, by a thickness d, on an end surface of the sleeve, around the circumference thereof. The lens holder 7 and guard ring 8 are bonded on the end surface of sleeve 3 by means of suitable bonding agent.

In such a structure, the spherical lens 4 can be provided at the end surface of optical fibre 1 by bonding the lens holder 7 which holds the spherical lens 4 to the end surface of the sleeve and the centre of spherical lens 4 can easily be aligned on the optical axis of optical fibre 1.

When the sleeves 3 are placed face to face in the adapter, the spherical lens 4 is protected by the lens holder 7 which is thicker than the lens and the lens is also further protected from damage due to direct contact between the sleeves because it is additionally protected by the guard ring 8 which is thicker than the lens holder 7. Moreover, since the lens holders 7 which directly hold the lenses do not come into contact, no force is applied to the lens holders and thereby problems such as displacement of lens holders 7 are not generated even after a long period of use. Here, it is desirable that the contact area offered by guard ring 8 should be comparatively large, in order to reduce the effects on a sleeve by distributing the stresses acting on sleeves arranged face to face when the guard rings come into direct contact. Moreover, guard ring 8 and lens holder 7 are provided separately so that stress on the guard ring 8 is not transmitted to lens holder 7.

The structure of sleeve and adapter will now be explained in more detail.

These items are conventionally made of stainless steel with mechanical boring. However, it is extremely difficult to provide, by mechanical boring, a hole with an accuracy of the order of several tenths of a micron, and it would be almost impossible to bore a comparatively long hole (for example 10 mm long).

However, if not supported over a certain length, an optical fibre can easily be subject to microbending or cannot be put into practical use because the straightness of the fibre is not assured.

With a view to solving this problem, an optical fibre connector using a jewel such as sapphire has already been proposed as a fibre support.

Boring techniques for jewels are already known in the field of watch making and it is possible to bore a hole with an accuracy of several tenths of a micron.

However, in this case, boring is also carried out mechanically and a support of the specified length would inevitably have to be structured by piling several plate sapphires together, each of which is split in the longitudinal direction. Thus the structure required has been complicated and the manufacturing cost has been relatively high. Thus such a proposal could not be said to be satisfactory.

In an embodiment of the present invention this problem is overcome.

In this embodiment, the sleeve is formed of sintered material such as $Al_2O_3$ etc.

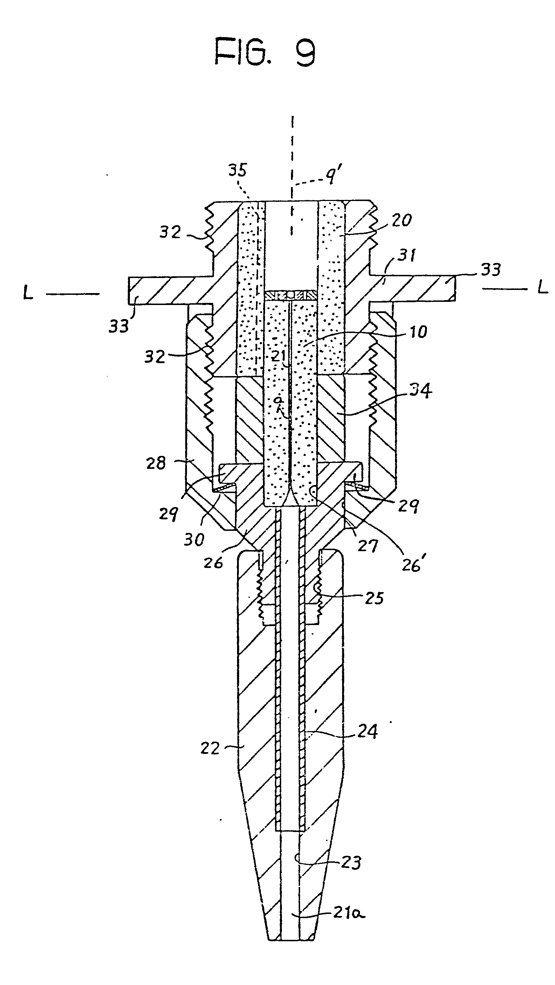

A preferred embodiment of this invention is explained in detail with reference to Figure 9.

An optical fibre connector of this preferred embodiment basically provides a sleeve 10, consisting of a sintered material for supporting an optical fibre 9 and an adapter 20 for mounting the sleeve 10. The sleeve 10 has a fine axial hole 21 of a diameter of 0.125 $\varnothing$ mm, for example, along its central axis, wherein an optical fibre 9 of the same diameter is inserted by a press-in method. In this embodiment of the present invention, since the sleeve 10 is formed of $Al_2O_3$ (including 99 % ceramics, 96 % ceramics or so-called 100 % ceramics (including ($MgO$ ... 0.25 wt%, $Cr_2O_3$ ... 0.025 wt%)), the axial hole 21 can be bored by means of a laser beam. Namely, a hole with an accuracy on the order of as little as several tenths of a micron can be bored without any difficulty, by means of the laser beam. Moreover, boring by laser beam does not place severe limitations on the maximum possible length of sleeve 10 and therefore a sleeve of a length of 10 mm, for example, can be formed in a single unit using the sintered material. The inlet end (the lower end in the Figure) of the axial hole 21 should desirably be chamfered as shown in Figure, to facilitate insertion of the optical fibre 9 into the axial hole 21.

A nylon protection layer 21a of the optical fibre is inserted and bonded into a stainless pipe 24, for example, which is itself inserted and bonded into a centre hole 23 of a holder 22 which is formed, for example of aluminium (Al). The upper end of holder 22 is provided with a screw-threaded hole 25 into which a stainless holding member 26 is screwed. The sleeve 10 is pushed into a U-section area 27 at the upper end of the holding member 26. The nylon protection layer 21a is peeled from the fibre 9 so that the latter is exposed at the bottom of the U-section area 27 of the holding member 26. To the outer circumference of the holding member 26, a nut member 28 forming a screw-threaded hole is fitted. A spring washer 30 explained later is arranged between the nut member 28 and a flange 29 of the holding member 26. The upper end of the nut member 28 is screwed onto a screw threaded part 32 at the outer circumference of a connector 31 with a flange 33 which is made of stainless steel. The flange 33 of the connector is useful, for example, as a fitting part for mounting the connector to another unit or as a handle for carrying it manually.

The adapter 20 is also formed of a sintered material as in the case of the sleeve. The adapter 20 may be of an ordinary cylinder shape and it is fitted into an internal bore of the connector 31. The connector 31 is symmetrical about a line L-L as seen in Figure 9, and although it is not illustrated, a structure of the same configuration as that indicated for fibre 9 is used to connect another optical fibre 9' symmetrically to the upper half of the connector 31. At both ends of adapter 20, a spring sleeve 34 formed, for example, of silicon rubber is arranged between the adapter and holding member 26. The sleeve 34 is closely fitted around the circumference of the sleeve 10.

Desirably, at least one air-espace groove 35 is formed in the axial direction of the adapter 20 at the internal circumference of the adapter 20. Provision of such an air-escape groove 35 brings about the following effects. Namely, in the condition as shown in Figure 9, when the other optical fibre 9' to be connected is to be inserted into the adapter 20 from above, together with a sleeve 10, the sleeve acts as if it were a piston. Therefore, it cannot be pushed down easily due to the compressed air between the two sleeves. However, when air-escape groove 35 is provided, the compressed air can escape through such air-escape groove 35 from the upper end of the adapter. Thus, the sleeves can be pressed down smoothly.

It might be considered to provide an air-escape groove at the area from the symmetrical centre surface of the connector in a radial direction. However, this is not desirable because foreign matter such as water or dust may reach the contact surface of the sleeve 10. In this sense, air-escape groove 35 provided in the axial direction contributes to improvement of the air-tightness of the optical fibre connector.

Although this is not illustrated, it can be understood that the same effect can be obtained by providing an air-escape groove 35 in the outer circumference of one or both sleeves 10, rather than in the internal circumference of the adapter 20.

The spring sleeve 34 and spring washer 30 can absorb forces in the axial direction which are applied to the lower sleeve 10 when optical fibre 9' is inserted with its own sleeve 10', for example, from above into the adapter and when it is pressed down into the lower sleeve 10. Therefore, when force is removed, the two sleeves are pressed face to face with one another because they are urged by the spring sleeve 34 and spring washer 30. The holding member 26 acts as a thrust member and 30 is a spring washer.

Moreover, since both the adapter 20 and sleeve 10 are formed of $Al_2O_3$ or its equivalent, friction powder due to friction between the sleeve and adapter is not generated even when a sleeve 10 is being inserted or removed and as a result a large insertion force is not required and damage is not caused to surfaces of the sleeve and adapter. This is because the $Al_2O_3$ has a hardness next only to that of diamond, and it is notably superior to stainless steel.

In practice, an axial hole of a specified diameter in a sleeve may be formed by at first boring a hole a little smaller in diameter than the specified diameter by means of a laser beam and then by enlarging the hole up to the specified diameter through marked lapping using, for example, diamond powder and a tungsten wire. In this case, since the sleeve 10 is outstandingly harder and smoother than stainless steel, possibility of centre deflection and destruction at a surface during axial hole boring is much smaller than that for stainless steel. As a result, very excellent surface accuracy of the sleeve 10 and centering of the axial hole can be assured. As a result straightness at the optical joint is also improved.

Moreover, the thermal expansion coefficient of the $Al_2O_3$ is quite similar to that of quartz which is

normally used for forming the cladding of optical fibre 9, thus only small deformations result from thermal changes, and a satisfactory temperature characteristic is achieved.

Finally, the adapter and sleeve in an embodiment of this invention can be formed of sintered alumina which can be put into mass-production at a low cost, and resultingly the manufacturing cost of the connector as a whole can be reduced drastically.

The structure shown in Figure 9 indicates another feature of this invention. It is required for an optical connector to match accurately the optical axes of optical fibres and not to allow changes in the connection conditions of the fibres due to external forces applied on those parts of the fibres extending outside the connector.

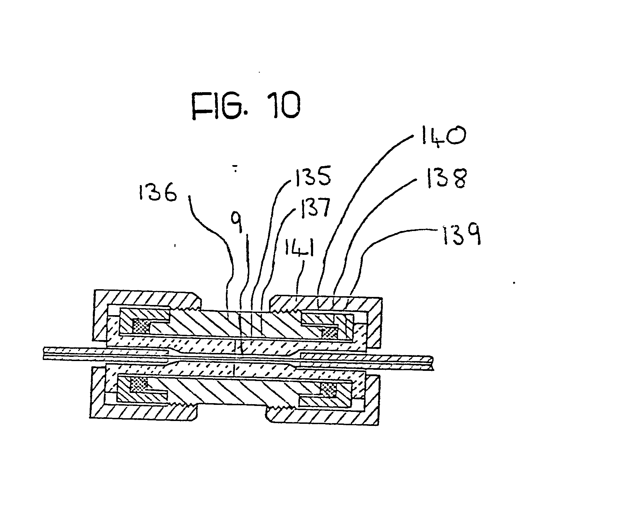

This object has been attained in an existing connector having a structure as shown in Figure 10. In the connector of Figure 10 an optical fibre 9 is inserted first into a sleeve 135, and the sleeve 135 is inserted into an adapter 136. The sleeve fits the adapter. Where the sleeve fits the adapter is indicated as a first fitting 137 in Figure 10.

In order to connect a sleeve 135 and adapter 136, they are tightened against a buffer (138) with a cap nut 141, with a core 140 sandwiched between the buffer and cap nut. The sleeve fits into the core. Where the sleeve fits the core is indicated as a second fitting 139 in Figure 10.

The fit of the sleeve into the adapter is intended to ensure accurate alignment of the optical fibre axes, while the fit of the sleeve in the core 40 is intended to protect the sleeve by assisting in alignment of sleeve and adapter during insertion and preventing breakage of the sleeve when the cap nut 141 is tightened.

However, the additional use of a core makes the connector relatively expensive and the necessity for sequential insertions into the core and adapter when inserting the sleeve into the adapter can cause problems of unsmooth insertion.

In the embodiment of the present invention shown in Figure 9, a second fitting is in effect formed between a part 26' of the cap nut 28 and the holding member 26. Thus, it is possible to dispense with the core and eliminate the disadvantages of the structure of Figure 10.

The holding member fitting the cap nut which couples the sleeve and adapter with freedom of mounting and removal is provided at the end of the sleeve remote from the lenses.

The clearance at the fitting between the cap nut and holding member can be larger than that between the sleeve and adapter.

As will be apparent from the above explanation, in embodiments of the present invention, the use of lenses having adequate focal distance can facilitate accurate connection. In addition, the possibility for compensation for deflection of optical axes has alleviated the problems of dimensional accuracy requirements.

Thus, this invention relates to lens-applied optical fibre connectors to be used for optical communication. A lens-applied optical fibre connector is so structured that an optical fibre is inserted into the lens-carrying sleeve and this sleeve is inserted into the adapter.

In preferred embodiments of the present invention, the focal distance of the lenses used is selected to be from 0.09 to 0.27 mm and each lens is arranged in an area on the optical axis of an optical fibre spaced apart from the end surface of the fibre by substantially the focal distance of the lens.

**Claims**

1. A lens-applied optical fibre connector comprising a pair of cylindrical sleeves (3, 10), each having a through hole therein, for receiving an optical fibre (9), along its centre axis, a hollow cylindrical adapter (20) having a through hole formed therein for axially locating the sleeves, by insertion into opposite ends of the through hole in the adapter, and a pair of lenses (4) arranged between end surfaces of the sleeves which are disposed face-to-face in the through hole of the adapter when the sleeves are inserted, for optically connecting the optical fibres via the lenses, characterised in that each lens (4) of the pair of lenses is held in a lens holder (7) provided at the end surface of the sleeve to which the lens is adjacent, which lens holder (7) is positioned on the end surface of that sleeve for aligning the centre of the lens held in the lens holder with the optical axis of the optical fibre received in the sleeve and bonded in place after such positioning, and which lens holder projects towards the other sleeve beyond the lens so as to prevent contact between the lenses of the pair when the sleeves are inserted in the adapter, and in that a guard member (8) is provided for each lens holder, separately from the lens holder, at the end surface of the sleeve at which the lens holder is provided, which guard member (8) projects towards the other sleeve beyond the lens holder (7) so as to prevent contact between the respective lens holders when the sleeves are inserted in the adapter.

2. A connector as claimed in claim 1, wherein the lenses are spherical lenses each having a focal distance in the range from 0.09 mm to 0.27 mm.

3. A connector as claimed in claim 2, wherein the spherical lenses each have a refractive index in the range from 1.7 to 2.1.

4. A connector as claimed in claim 3, wherein the spherical lenses each have a radius in the range from 0.08 mm to 0.16 mm.

5. A connector as claimed in any preceding claim, wherein each sleeve is formed of material which mainly consists of alumina.

6. A connector as claimed in claim 5, wherein the sleeve is formed of a sintered material.

7. A connector as claimed in claim 5 or 6, wherein the adapter is formed of the same material as the sleeve.

8. A connector as claimed in any preceding claim, wherein the adapter has mounted in axial juxtaposition to each of its ends a further sleeve member (34) of an elastic material.

9. A connector as claimed in any preceding claim, wherein an air-escape groove (35) is further formed on the adapter or on one or both of the sleeves.

10. A connector as claimed in any preceding claim, wherein when the sleeves are inserted in the adapter each sleeve and the adapter are coupled together, so as to be freely uncouplable, by means of a cap nut (28) and a holding member (26) which fits between the cap nut and that end of the sleeve (10) remote from the lenses.

11. A connector as claimed in claim 10, wherein the clearance between the cap nut and the holding member is larger than the clearance between the sleeve and the adapter.

12. A connector as claimed in any preceding claim, in combination with respective single mode optical fibres connected thereby, an end surface of each optical fibre being spaced apart, from the centre of the lens held in the lens holder at the end of the sleeve into which the optical fibre is inserted by substantially the focal distance of the lens.

13. A connector as claimed in claim 12, wherein the end surface of one optical fibre is inclined at a preselected gradient angle $\phi$ to the normal to the fibre axis determined by the equation

$$\theta = Y/f(n_0 - 1)$$

where, Y is the axial displacement of the optical axis of the optical fibre from the centre line of the sleeve holding the fibre, f is the focal distance of the spherical lens adjacent the end surface of the optical fibre, and $n_0$ is the refractive index of the core of the optical fibre.

**Patentansprüche**

1. Mit einer Linse ausgerüsteter Verbinder für optische Fasern, mit einem Paar zylindrischer Buchsen (3, 10), welche jeweils ein durchgehendes Loch zur Aufnahme einer optischen Faser (9) längs ihrer Mittelachse aufweisen, mit einem hohlen zylindrischen Adapter (20), welcher ein durchgehendes Loch zur axialen Lokalisierung der Buchsen durch Einführen von entgegengesetzten Seitenenden her aufweist, und mit einem Paar von Linsen (4), welche zwischen den Stirnflächen der Buchsen angeordnet sind, die mit ihren Stirnflächen einander entgegengerichtet in dem durchgehenden Loch des Adapters angeordnet sind, um die optischen Fasern über die Linsen (4) miteinander zu verbinden, wenn die Buchsen eingeführt werden, dadurch gekennzeichnet, daß jede der Linsen (4) des Linsenpaars in einem Linsenhalter (7) gehalten ist, welcher an der Stirnfläche der der Linse (4) benachbarten Buchse vorgesehen ist, welcher Linsenhalter (7) positioniert ist auf der Stirnfläche von jener Buchse zur Ausrichtung des Zentrums der Linse, die in dem Linsenhalter gehalten wird, mit der optischen Achse der optischen Faser, in der Buchse aufgenommen und, nach solch einer Positionierung, an ihrem Platz gebunden, und welcher Linsenhalter zu der anderen Buchse hin über die Linse hinweg vorsteht, um eine Berührung zwischen den Linsen des Linsenpaares zu verhindern, wenn die Buchsen in den Adapter eingeführt sind, und daß an der Stirnfläche der Buchse, an welcher der Linsenhalter vorgesehen ist, getrennt von diesem ein Schutzteil (8) für jeden Linsenhalter vorgesehen ist, der zu der anderen Buchse (3, 10) hin über den Linsenhalter (7) hinaus vorsteht, um so eine Berührung zwischen den entsprechenden Linsenhaltern zu vermeiden, wenn die Buchsen in den Adapter eingeführt sind.

2. Verbinder nach Anspruch 1, dadurch gekennzeichnet, daß die Linsen sphärisch und mit einer Brennweite im Bereich von 0,09 mm bis 0,27 mm ausgebildet sind.

3. Verbinder nach Anspruch 2, dadurch gekennzeichnet, daß die sphärischen Linsen jeweils einen Brechungsindex im Bereich zwischen 1,7 und 2,1 haben.

4. Verbinder nach Anspruch 3, dadurch gekennzeichnet, daß die sphärischen Linsen jeweils einen Radius im Bereich zwischen 0,08 mm und 0,16 mm aufweisen.

5. Verbinder nach einem der vorhergehenden Ansprüche, dadurch gekennzeichnet, daß jede Buchse (3, 10) aus einem Material geformt ist, welches hauptsächlich aus Tonerde besteht.

6. Verbinder nach Anspruch 5, dadurch gekennzeichnet, daß die Buchse aus gesintertem Material geformt ist.

7. Verbinder nach Anspruch 5 oder 6, dadurch gekennzeichnet, daß der Adapter aus demselben Material wie die Buchse geformt ist.

8. Verbinder nach einem der vorhergehenden Ansprüche, dadurch gekennzeichnet, daß in axialer Richtung neben jedem Ende des Adapters eine weitere Buchse (34) aus elastischem Material angeordnet ist.

9. Verbinder nach einem der vorhergehenden Ansprüche, dadurch gekennzeichnet, daß eine Entlüftungsnut (35) an dem Adapter oder an einer oder an beiden Buchsen vorgesehen ist.

10. Verbinder nach einem der vorhergehenden Ansprüche, dadurch gekennzeichnet, daß beim Einführen der Buchsen in den Adapter jede Buchse und der Adapter mit Hilfe einer Kappenmutter (28) und eines Halteteils (26), welches zwischen die Kappenmutter und dem von den Linsen entfernten Ende der Buchse (10) paßt, miteinander leicht lösbar gekoppelt sind.

11. Verbinder nach Anspruch 10, dadurch gekennzeichnet, daß der Abstand zwischen der Kappenmutter und dem Halteteil größer als der Abstand zwischen der Buchse und dem Adapter ist.

12. Verbinder nach einem der vorhergehenden Ansprüche, in Kombination mit entsprechenden optischen Einmoden-Fasern, die mit ihnen verbunden sind, wobei eine Stirnfläche jeder opti-

schen Faser in einem Abstand von dem Zentrum der in dem Linsenhalter an einem Ende der Buchse gehaltenen Linse angeordnet ist, in welcher die optische Faser im wesentlichen im Abstand der Brennweite von der Linse eingeführt ist.

13. Verbinder nach Anspruch 12, dadurch gekennzeichnet, daß die Stirnfläche einer optischen Faser zur Normalen der Faserachse um einen vorbestimmten Gradientenwinkel φ geneigt ist, welcher durch die Gleichung

$$\theta = Y/f\,(n_0 - 1)$$

bestimmt ist, wobei Y die axiale Versetzung der optischen Achse der optischen Faser von der Mittellinie der die Faser haltenden Buchse, f die Brennweite der sphärischen Linse neben der Stirnfläche der optischen Faser und $n_0$ der Brechungsindex des Kerns der optischen Faser ist.

## Revendications

1. Connecteur pour fibres optiques utilisant des lentilles qui comprend une paire de manchons cylindriques (3, 10) comportant chacun un trou passant, qui sert à recevoir une fibre optique (9), suivant son axe central, un raccord cylindrique creux (20) comportant un trou passant qui sert à positionner axialement les manchons par insertion dans les extrémités opposées du trou passant du raccord, et une paire de lentilles (4) disposée entre les surfaces terminales des manchons qui sont disposées en regard dans le trou passant du raccord lorsque les manchons sont insérés, pour raccorder optiquement les fibres optiques par l'intermédiaire des lentilles, caractérisé en ce que chaque lentille (4) de la paire de lentilles est montée dans un porte-lentille (7) disposé au niveau de la surface terminale du manchon auquel la lentille est adjacente, lequel porte-lentille est positionné sur une surface terminale de ce manchon pour aligner le centre de la lentille maintenue dans le porte-lentille avec l'axe optique de la fibre optique reçue dans le manchon et liée en place après un tel positionnement, ledit porte-lentille (7) faisant saillie en direction de l'autre manchon au-delà de la lentille afin d'empêcher tout contact entre les lentilles de la paire lorsque les manchons sont insérés dans le raccord, et en ce qu'un élément de garde (8) est prévu pour chaque porte-lentille, séparément du porte-lentille, à l'extrémité terminale du manchon à laquelle le porte-lentille est disposé, lequel élément de garde (8) fait saillie en direction de l'autre manchon au-delà du porte-lentille (7) de façon à empêcher tout contact entre les porte-lentilles respectifs lorsque les manchons sont insérés dans le raccord.

2. Connecteur selon la revendication 1, où les lentilles sont des lentilles sphériques présentant chacune une distance focale comprise entre 0,09 et 0,27 mm.

3. Connecteur selon la revendication 2, où les lentilles sphériques ont chacune un indice de réfraction compris entre 1,7 et 2,1.

4. Connecteur selon la revendication 3, où les lentilles sphériques ont chacune un rayon compris entre 0,8 et 0,16 mm.

5. Connecteur selon l'une quelconque des revendications précédentes, où chaque manchon est formé d'un matériau qui est principalement constitué d'alumine.

6. Connecteur selon la revendication 5, où le manchon est formé d'un matériau fritté.

7. Connecteur selon la revendication 5 ou 6, où le raccord est formé du même matériau que le manchon.

8. Connecteur selon l'une quelconque des revendications précédentes, où le raccord porte, en juxtaposition axiale avec chacune de ses extrémités, un autre élément de manchon (34) fait d'un matériau élastique.

9. Connecteur selon l'une quelconque des revendications précédentes, où une encoche d'échappement d'air (35) est en outre formée sur le raccord ou bien sur l'un des manchons ou sur les deux manchons.

10. Connecteur selon l'une quelconque des revendications précédentes, où, lorsque les manchons sont insérés dans le raccord, chaque manchon et le raccord sont couplés ensemble, de façon à pouvoir être librement démontés, par l'intermédiaire d'un écrou à chapeau (28) et d'un élément de support (26) qui s'ajuste entre l'écrou à chapeau et l'extrémité du manchon (10) qui est opposée aux lentilles.

11. Connecteur selon la revendication 10, où le jeu existant entre l'écrou à chapeau et l'élément de support est plus grand que le jeu existant entre le manchon et le raccord.

12. Connecteur selon l'une quelconque des revendications précédentes, en combinaison avec des fibres optiques monomodes respectives raccordées par le connecteur, une surface terminale de chaque fibre optique étant séparée, du centre de la lentille montée dans le porte-lentille à l'extrémité du manchon dans lequel la fibre optique est insérée, d'une distance sensiblement égale à la longueur focale de la lentille.

13. Connecteur selon la revendication 12, où la surface terminale d'une fibre optique est inclinée d'un angle de gradient présélectionné φ par rapport à la perpendiculaire à l'axe de la fibre qui est déterminé par l'équation

$$\theta = Y/f\,(n_0 - 1)$$

dans laquelle Y est l'écartement axial de l'axe optique de la fibre optique par rapport à la ligne centrale du manchon portant la fibre, f est la longueur focale de la lentille sphérique adjacente à la surface terminale de la fibre optique et $n_0$ est l'indice de réfraction de l'âme de la fibre optique.

FIG. 1

FIG. 2

## FIG. 3

L (dB)

R (mm)

## FIG. 4

L (dB)

R (nm)

# FIG. 5

# FIG. 6

# FIG. 7

# FIG. 8

# FIG. 9

# FIG. 10